# EUROPÄISCHE PATENTSCHRIFT

(11) **EP 2 001 706 B1**
(45) Veröffentlichungstag und Bekanntmachung des Hinweises auf die Patenterteilung: **18.11.2009**
(21) Anmeldenummer: 07711611.9
(22) Anmeldetag: 21.02.2007
(51) Int. Cl.: B60N 2/235

(54) **BESCHLAG FÜR EINEN FAHRZEUGSITZ**
FITTING FOR A VEHICLE SEAT
FERRURE POUR UN SIEGE DE VEHICULE

(30) Priorität: 04.04.2006 DE 102006015560
(43) Veröffentlichungstag der Anmeldung: 17.12.2008
(73) Patentinhaber: KEIPER GmbH & Co. KG, 67657 Kaiserslautern (DE)
(72) Erfinder: PETERS, Christoph, 42929 Wermelskirchen (DE); LEHMANN, Ulrich, 53347 Alfter (DE)
(74) Vertreter: Patentanwälte Hosenthien-Held und Dr. Held
(86) Internationale Anmeldenummer: PCT/EP2007/001484
(87) Internationale Veröffentlichungsnummer: WO 2007/115601

(56) Entgegenhaltungen:
- EP-A2- 1 197 377
- DE-A1- 19 928 148

## Beschreibung

Die Erfindung betrifft einen Beschlag mit den Merkmalen des Oberbegriffs des Anspruches 1.

In der US 6,648,413 B2 wird ein Beschlag der eingangs genannten Art vorgeschlagen, bei dem das Freischwenk-Steuerelement das Einfallen genau eines Riegels steuert, der wiederum beim Freischwenken den Exzenter beaufschlagt und so sperrt, dass dieser nicht die anderen Riegel beaufschlagen kann. Diese Lösung erlaubt es, Freischwenk-Winkelbereiche vorzusehen, die größer als der Winkelabstand zwischen zwei Riegeln ist. Dies ist insbesondere bei einer größeren Anzahl von Riegeln vorteilhaft, wie sie bei Beschlägen von Gurtintegralsitzen eingesetzt werden, um wegen der höheren Belastung für eine höhere Festigkeit des Beschlags zu sorgen.

Der Erfindung liegt die Aufgabe zu Grunde, bei einem Beschlag der eingangs genannten Art eine weitere Möglichkeit zu schaffen, beim Freischwenken entriegelt zu bleiben. Diese Aufgabe wird erfindungsgemäß durch einen Beschlag mit den Merkmalen des Anspruches 1 gelöst. Vorteilhafte Ausgestaltungen sind Gegenstand der Unteransprüche.

Erfindungsgemäß weist das Freischwenk-Steuerelement wenigstens eine zur ersten Anschlagbahn axial und/oder radial versetzte zweite Anschlagbahn auf. Die Riegel sind so in Gruppen unterteilt, dass benachbarte Riegel mit unterschiedlichen Anschlagbahnen zusammenwirken. Im Vergleich zu ineinander übergehenden Anschlagbahnen, bei denen die Riegel beim Verdrehen der Beschlagteile über einen größeren Relativwinkelbereich hinweg in den Bereich des benachbarten Riegels gelangen, steht vorliegend jedem Riegel eine doppelt so lange Anschlagbahn zur Verfügung. Damit kann auch ein größerer Freischwenk-Winkelbereich zur Verfügung gestellt werden als 360° geteilt durch die Anzahl der Riegel. Gegenüber einer Lösung mit einem besonderen Riegel, welcher als einziger offen gehalten wird und den Exzenter halten muss, liegen symmetrische Kraftverhältnisse vor.

Zur Erfüllung ihrer Aufgabe weisen die Anschlagbahnen vorzugsweise unterschiedliche Teilbereiche auf, von denen ein erster Teilbereich die Riegel unbeeinflusst lässt und ein zweiter Teilbereich, von der Größe des Freischwenk-Winkelbereichs, die Riegel am Zusammenwirken mit dem zweiten Beschlagteil hindert. Um die Beeinflussung der Riegel einfach zu realisieren, verlaufen die Teilbereich radial unterschiedlich weit außen bei wenigstens näherungsweise konstantem Abstand zur Achse, so dass sie als radiale Anschläge für die Riegel wirken können.

Um ein möglichst flaches Freischwenk-Steuerelement zu erhalten, das kaum Bauraum benötigt, sind die Anschlagbahnen selber vorzugsweise radial unterschiedlich weit außen gelegen. So können beispielsweise die ersten Anschlagbahnen jeweils am Rande einer Kulisse des Freischwenk-Steuerelements ausgebildet sein. Zwischen den Kulissen vorzugsweise vorgesehene Stege, die als Materialbrücken zum Zusammenhalt der Teile des Freischwenk-Steuerelements dienen, können vorzugsweise zugleich die Relativdrehung der Beschlagteile begrenzen. Die zweite Anschlagbahn kann am radial inneren (oder äußeren) Rand des ringförmigen Freischwenk-Steuerelements ausgebildet sein, wodurch eine bereits vorhandene Kontur ausgenützt wird.

Das Zusammenwirken des Freischwenk-Steuerelements und der Riegel erfolgt vorzugsweise mittels axial abstehender Nasen, wofür vorzugsweise die bereits zum Zusammenwirken mit der Steuerscheibe vorgesehenen Nasen verwendet werden. Entsprechend dem Versatz der Anschlagbahnen sind die verschiedenen Nasen radial unterschiedlich weit außen an ihren Riegeln angeordnet oder stehen axial unterschiedlich weit ab. Soweit die Anschlagbahnen und die Nasen radial unterschiedlich angeordnet sind, ist die Steuerscheibe mit entsprechenden Steuerbahnen daran angepasst.

Der erfindungsgemäße Beschlag wird bevorzugt bei einem Fahrzeugsitz, genauer gesagt einem Gurtintegralsitz mit freischwenkbarer Lehne, zur Anbringung der Lehne am Sitzteil und Neigungseinstellung der Lehne eingesetzt, könnte aber auch anderweitig im Fahrzeugsitz oder bei einem anderen Fahrzeugsitz verwendet werden.

Im folgenden ist die Erfindung anhand eines in der Zeichnung dargestellten Ausführungsbeispiels näher erläutert. Es zeigen
- Fig. 1: eine Explosionsdarstellung des Ausführungsbeispiels,

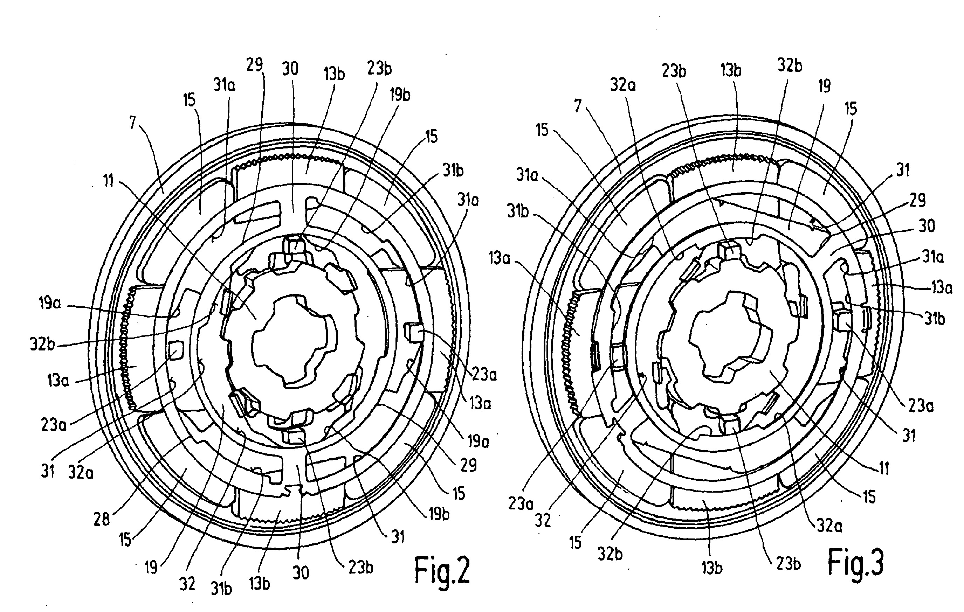

- Fig. 2: eine leicht perspektivische Ansicht des Ausführungsbeispiels ohne zweites Beschlagteil in einer Gebrauchsstellung,
- Fig. 3: eine Fig. 2 entsprechende Ansicht im Freischwenkbereich, und

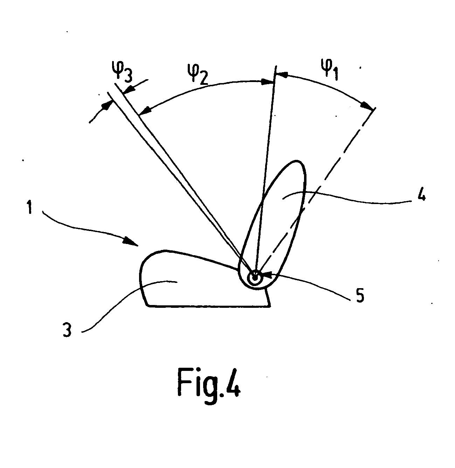

- Fig. 4: eine schematische Seitenansicht eines Fahrzeugsitzes.

Ein Fahrzeugsitz 1 eines Kraftfahrzeuges weist ein Sitzteil 3 und eine Lehne 4 auf, welche mittels zweier Beschläge seitlich am Sitzteil 3 angebracht, relativ zu diesem schwenkbar und mit unterschiedlichen Neigungseinstellungen verriegelbar ist. Die Ausrichtung des Fahrzeugsitzes 1 im Kraftfahrzeug und dessen gewöhnliche Fahrtrichtung einerseits sowie die Symmetrie und Anordnung der Beschläge im Fahrzeugsitz 1 andererseits definieren die verwendeten Richtungsangaben. Der Fahrzeugsitz 1 ist als Gurtintegralsitz ausgebildet, d.h. das obere Ende eines Sicherheitsgurtes ist an der Lehne 4 befestigt, genauer gesagt an einem Gurtautomat an der Oberkante der Lehne 4. Die im Belastungsfall über den Sicherheitsgurt in die Lehne 4 eingeleiteten Kräfte sind daher über die Beschläge ins Sitzteil 3 weiterzuleiten, weshalb wenigstens der Beschlag 5 auf der höherbelasteten Fahrzeugsitzseite, an welcher der Sicherheitsgurt angebracht ist, als Hochlastbeschlag ausgebildet ist.

Der Beschlag 5 beruht auf dem gleichen Prinzip, wie der in der DE 102 53 054 A1 beschriebene Beschlag, weshalb deren Offenbarung ausdrücklich einbezogen wird. Der Beschlag 5 ist als Rastbeschlag in einer Scheibenform ausgebildet. Der Beschlag 5 weist ein erstes Beschlagteil 7 und ein relativ zu diesem um eine Achse A verdrehbares zweites Beschlagteil 8 auf, welche zwischen sich einen Bauraum definieren. Ein reifenartiger Umklammerungsring 9 übergreift das - relativ zum Umklammerungsring 9 bewegliche - zweite Beschlagteil 8 und ist mit dem ersten Beschlagteil 7 verbunden, wodurch die beiden Beschlagteile 7 und 8 axial zusammengehalten werden. Vorliegend ist zwischen dem Umklammerungsring 9 und dem zweiten Beschlagteil 8 ein Dämpfungsrings 9a angeordnet, und das erste Beschlagteil 7 ist fest in den Umklammerungsring 9 eingepresst. Vorzugsweise werden das erste Beschlagteil 7 und der Umklammerungsring 9 gemeinsam mit einem Strukturteil des Fahrzeugsitzes 1 verschweißt. Dabei ist vorliegend das erste Beschlagteil 7 mit dem Sitzteil 3 und das zweite Beschlagteil 8 mit der Lehne 4 verbunden. Die umgekehrte Anordnung ist aber auch möglich.

Im Zentrum des Beschlags 5 ist ein Mitnehmer 10 angeordnet, welcher um die Achse A drehbar am zweiten Beschlagteil 8 gelagert ist, genauer gesagt in einer Öffnung desselben. Der Mitnehmer 10 ist axial gesichert durch einen Sicherungsring oder Mitnehmerdeckel 10a, welcher bei der Montage des Beschlags 5 am Mitnehmer 10 befestigt wird, vorzugsweise aufgeclipst wird. Der Mitnehmer 10 und der Mitnehmerdeckel 10a weisen je einen Flansch auf, der jeweils auf der Außenseite eines der beiden Beschlagteile 7 oder 8 anliegt.

Auf dem Mitnehmer 10 sitzt drehfest oder wenigstens auf Mitnahme gekoppelt ein im Bauraum angeordneter Exzenter 11. Der Exzenter 11 wirkt auf zwei erste Riegel 13a und zwei zweite Riegel 13b ein, welche abwechselnd um je 90° versetzt zueinander im Bauraum um den Exzenter 11 herum angeordnet sind und auf ihrer radial (bezüglich der Achse A) außen liegenden Seite mit einer Verzahnung versehen sind, um mit einem Zahnkranz 14 des als Hohlrad ausgebildeten zweiten Beschlagteils 8 zusammenzuwirken. Der Beschlag 5 ist dann verriegelt. Die Riegel 13a und 13b werden in radialer Richtung durch Führungssegmente 15 des ersten Beschlagteils 7 geführt. Das zweite Beschlagteil 8 liegt mit dem Zahnkranz 14 auf den vier Führungssegmenten 15 auf, wodurch das zweite Beschlagteil 8 am ersten Beschlagteil 7 gelagert ist. Ein für die Bedienung des Beschlags 5 notwendiges Spiel kann bei verriegeltem Beschlag 5 durch ein - bezüglich der radialen Richtung seitliches - Verkippen der Riegel 13a und 13b beseitigt werden, wobei die ersten Riegel 13a und die zweiten Riegel 13b vorzugsweise in entgegengesetzte Richtungen kippen, um dann im Belastungsfall eine insgesamt höhere Festigkeit zu zeigen.

Eine Federanordnung 17 ist in einer zentralen Aussparung des ersten Beschlagteils 7 angeordnet und beaufschlagt den Exzenter 11, so dass dieser die Regel 13 radial nach außen drückt, d.h. in den Zahnkranz 14, womit der Beschlag 5 verriegelt ist. Die zentral angeordnete Federanordnung 17 besteht aus zwei Einzelfedern, welche jeweils für sich als Flachspiralfeder ausgebildet sind und um die Achse A herum um 180° verdreht zueinander und ineinander geschachtelten angeordnet sind, d.h. die Abstände der jeweiligen Windungen sind so groß gewählt, dass zwischen zwei Windungen der einen Feder eine Windung der anderen Feder zu liegen kommt und umgekehrt, und dass jeweils noch ein ausreichender Federweg für eine Kontraktion oder Expansion zur Verfügung steht. Diese Federanordnung 17 beaufschlagt den Exzenter 11 querkraftfrei.

Eine Steuerscheibe 19 ist im Bauraum axial zwischen den Riegeln 13 und dem zweiten Beschlagteil 8 angeordnet und sitzt vorliegend drehfest auf dem Exzenter 11. Die Steuerscheibe 19 weist zwei erste Steuerbahnen 19a innerhalb je einer Aussparung der Steuerscheibe 19 und zwei zweite Steuerbahnen 19b am radial innen liegenden Rand der mit einer zentralen Öffnung versehenen Steuerscheibe 19 auf, die jeweils abwechselnd angeordnet sind. Die ersten Steuerbahnen 19a wirken jeweils mit einer ersten Nase 23a jedes ersten Riegels 13a zusammen, während die zweiten Steuerbahnen 19b jeweils mit einer zweiten Nase 23b jedes zweiten Riegels 13b zusammenwirken. Die Nasen 13a und 13b stehen dabei in axialer Richtung von den Riegeln 13a und 13b ab. Entsprechend der Anordnung der Steuerbahnen 19a und 19b sind die ersten Nasen 23a radial ungefähr in der Mitte der ersten Riegel 13a angeordnet, während die zweiten Nasen 23b an der radial innen liegenden Seite der zweiten Riegel 13b angeordnet sind. Bei einer Drehung des Mitnehmers 10 - und des damit angetriebenen Exzenters 11 und der Steuerscheibe 19 - entgegen der Kraft der Federanordnung 17 zieht die Steuerscheibe 19 die Riegel 13a und 13b radial nach innen, d.h. aus dem Zahnkranz 14, womit der Beschlag 5 entriegelt ist.

Bei der Neigungseinstellung der Lehne 4 nimmt diese verschiedene, zum Sitzgebrauch geeignete Gebrauchsstellungen ein. Die Gebrauchsstellungen der Lehne 4 liegen dabei in einem Winkelbereich ϕ₁ eines sitzfesten Koordinatensystems. Der Winkelbereich ϕ₁ ist nach hinten durch Anschläge außerhalb des Beschlags 5 begrenzt. Mittels Freischwenken der Lehne 4 soll der Zugang zu einer hinteren Sitzreihe erleichtert werden. Hierzu werden die Beschläge mittels eines Betätigungselementes entriegelt, und die Lehne 4 wird aus einer der Gebrauchsstellungen nach vorne geschwenkt, wobei sie einen Winkelbereich ϕ₂, im folgenden auch als Freischwenk-Winkelbereich bezeichnet, überstreicht. Der Winkelbereich ϕ₂ schließt sich an den Winkelbereich ϕ₁ der Gebrauchsstellungen nach vorne hin an. Das Freischwenken endet in einer schräg nach vorne geneigten Stellung, im folgenden als freigeschwenkte Stellung bezeichnet. Die freigeschwenkte Stellung liegt in einem Winkelbereich ϕ₃ von verschwindend geringer Breite, der sich an den Freischwenk-Winkelbereich ϕ₂ nach vorne hin anschließt. Innerhalb des Winkelbereichs ϕ₃ ist der Beschlag 5 vorliegend wieder verriegelbar. Die Winkelbereiche ϕ₁, ϕ₂, ϕ₃ der Lehne 4 entsprechen bestimmten Relativwinkelbereichen der Beschlagteile 7 und 8.

Es erhöht den Bedienkomfort, wenn das Betätigungselement nicht während des gesamten Freischwenkens gehalten werden muss und die Beschläge trotzdem erst in der freigeschwenkten Stellung verriegeln. Für einen Beschlag mit zwei Riegeln wird dafür in der DE 199 28 148 A1 ein zusätzlicher Ring im Inneren des Beschlags vorgeschlagen. Bei einer Übertragung dieser Lösung auf den vorliegenden Beschlag stößt die Lösung an ihre Grenzen, wenn der Freischwenk-Winkelbereich größer als 90° sein soll.

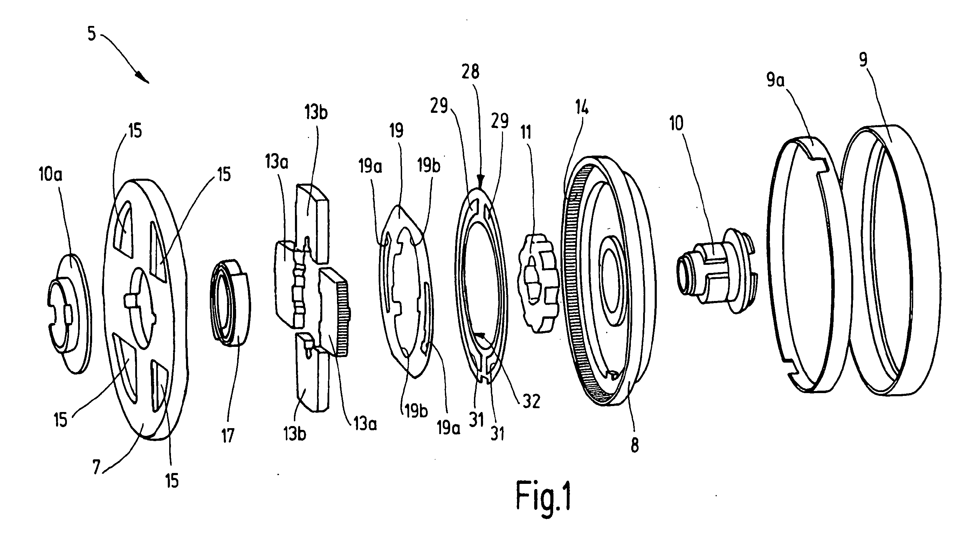

Im Beschlag 5 ist daher zwischen der Steuerscheibe 19 und dem zweiten Beschlagteil 8 um die Achse A herum ein ringförmiges Freischwenk-Steuerelement 28 vorgesehen, welches drehfest mit dem zweiten Beschlagteil 8 verbunden ist. Für die drehfeste Verbindung ist vorliegend am Freischwenk-Steuerelement 28 an dessen äußerem Rand eine Mitnahmekontur in Form eines Ausschnitts und am zweiten Beschlagteil 8 eine mit der Mitnahmekontur zusammenwirkende Mitnahmegegenkontur in Form einer radial nach innen vorspringenden Materialpartie vorgesehen, wie in Fig. 1 angedeutet. Das Freischwenk-Steuerelement 28 weist zwei um die Achse A gekrümmte Kulissen 29 auf, die jeweils durch einen Steg 30 voneinander getrennt sind. Innerhalb der Kulissen 29 ist am radial äußeren Rand jeweils eine erste Anschlagbahn 31 ausgebildet, während am radial inneren Rand des Freischwenk-Steuerelements 28 eine zweite Anschlagbahn 32 vorgesehen ist. Die Anschlagbahnen 31 und 32 weisen jeweils wenigstens einen radial weiter außen verlaufenden ersten Teilbereich 31a bzw. 32a und wenigstens einen radial weiter innen verlaufenden zweiten Teilbereich 31b und 32b auf, die für sich jeweils einen wenigstens näherungsweise konstanten Abstand zur Achse A (Radius) aufweisen. Die zweite Anschlagbahn 32 erstreckt sich über 360° und weist zwei um 180° zueinander versetzte zweite Teilbereiche 32b auf, während die beiden ersten Anschlagbahnen 31 sich über etwas weniger als 180° erstrecken und jeweils nur einen zweiten Teilbereich 31b aufweisen, wobei diese beiden zweiten Teilbereiche 31b ebenfalls um 180° zueinander versetzt sind.

Die ersten Nasen 23a der ersten Riegel 13a wirken nicht nur mit der Steuerscheibe 19, sondern zusätzlich mit je einer ersten Anschlagbahn 31 zusammen, während die zweiten Nasen 23b der zweiten Riegel 13b mit der zweiten Anschlagbahn 32 zusammenwirken. Das Freischwenk-Steuerelement 28 ist so im zweiten Beschlagteil 8 angeordnet, dass in den Gebrauchsstellungen der Lehne 4 sich die ersten Nasen 23a in den ersten Teilbereichen 31a der ersten Anschlagbahn 31 und die zweiten Nasen 23b im ersten Teilbereich 32a der zweiten Anschlagbahn 32 befinden. Die ersten Teilbereiche 31a und 32a sind radial soweit außen gelegen, dass die Riegel 13a und 13b ungehindert mit dem zweiten Beschlagteil 8 zusammenwirken können, d.h. in den Zahnkranz 14 einfallen können.

Wenn beim Freischwenken die Lehne 4 in den Freischwenk-Winkelbereich ϕ₂ eintritt, gelangen die ersten Nasen 23a in die zweiten Teilbereiche 31b der ersten Anschlagbahn 31 und die zweiten Nasen 23b in die zweiten Teilbereiche 32b der zweiten Anschlagbahn 32. Die zweiten Teilbereiche 31b und 32b sind radial soweit innen gelegen, dass sie als Anschläge für die Riegel 13a und 13b wirken und diese daran hindern, mit dem zweiten Beschlagteil 8 zusammenzuwirken, d.h. in den Zahnkranz 14 einzufallen. Der Beschlag 5 kann nicht verriegeln. Die zweiten Teilbereiche 31b und 32b erstrecken sich über einen dem Freischwenk-Winkelbereich ϕ₂ entsprechenden Winkelbereich. Erst wenn daher die Lehne 4 die freigeschwenkte Stellung ϕ₃ erreicht hat, also den Freischwenk-Winkelbereich ϕ₂ überstrichen hat, gelangen die Nasen 23a und 23b wieder in die ersten Teilbereiche 31a und 32a, so dass der Beschlag 5 wieder verriegeln kann. Dabei sind die zweiten Teilbereiche 31b der ersten Anschlagbahn 31 und die die Relativdrehung der Beschlagteile 7 und 8 begrenzenden Stege 30 zwischen den Kulissen 29 so angeordnet, dass dazwischen nur ein kurzes Stück des ersten Teilbereichs 31a von der Breite einer ersten Nase 23a vorgesehen ist, welches die freigeschwenkte Stellung ϕ₃ definiert.

### Bezugszeichenliste

- 1: Fahrzeugsitz
- 3: Sitzteil
- 4: Lehne
- 5: Beschlag
- 7: erstes Beschlagteil
- 8: zweites Beschlagteil
- 9: Umklammerungsring
- 9a: Dämpfungsring
- 10: Mitnehmer
- 10a: Mitnehmerdeckel
- 11: Exzenter
- 13a: erster Riegel
- 13b: zweiter Riegel
- 14: Zahnkranz
- 15: Führungssegment
- 17: Federanordnung
- 19: Steuerscheibe
- 19a: erste Steuerbahn
- 19b: zweite Steuerbahn
- 23a: erste Nase
- 23b: zweite Nase
- 28: Freischwenk-Steuerelement
- 29: Kulisse
- 30: Steg
- 31: erste Anschlagbahn
- 31a: erster Teilbereich der ersten Anschlagbahn
- 31b: zweiter Teilbereich der ersten Anschlagbahn
- 32: zweite Anschlagbahn
- 32a: erster Teilbereich der zweiten Anschlagbahn
- 32b: zweiter Teilbereich der zweiten Anschlagbahn
- A: Achse
- ϕ₁: Winkelbereich der Gebrauchsstellungen
- ϕ₂: Freischwenk-Winkelbereich
- ϕ₃: Winkelbereich der freigeschwenken Stellung

## Patentansprüche

1. Beschlag für einen Fahrzeugsitz, insbesondere einen Kraftfahrzeugsitz, mit einem ersten Beschlagteil (7), einem relativ zum ersten Beschlagteil (7) um eine Achse (A) verdrehbaren zweiten Beschlagteil (8), einem antreibbaren und um die Achse (A) drehbar gelagerten Exzenter (11), wenigstens vier Riegeln (13a, 13b), welche vom ersten Beschlagteil (7) bezüglich der Achse (A) in radialer Richtung geführt sind, vom Exzenter (11) beaufschlagt radial nach außen bewegbar sind und zum Verriegeln des Beschlags (5) radial außen mit dem zweiten Beschlagteil (8) zusammenwirken, einer Steuerscheibe (19), welche zum Entriegeln des Beschlags (5) die Riegel (13a, 13b) radial nach innen zieht, und einem Freischwenk-Steuerelement (28), welches in einem bestimmten, einem Relativwinkelbereich der Beschlagteile (7, 8) entsprechenden Freischwenk-Winkelbereich (ϕ₂) den Beschlag (5) am Verriegeln hindert und welches wenigstens eine erste Anschlagbahn (31) zum Zusammenwirken mit wenigstens einem Riegel (13a) aufweist, **dadurch gekennzeichnet, dass** das Freischwenk-Steuerelement (28) wenigstens eine zur ersten Anschlagbahn (31) axial und/oder radial versetzte zweite Anschlagbahn (32) aufweist und dass die Riegel (13a, 13b) wenigstens zwei erste Riegel (13a), die mit der wenigstens ersten Anschlagbahn (31) zusammenwirken, und zu den ersten Riegeln (13a) jeweils benachbarte zweite Riegel (13b) umfassen, die mit der wenigstens zweiten Anschlagbahn (32) zusammenwirken.

2. Beschlag nach Anspruch 1, **dadurch gekennzeichnet, dass** die wenigstens eine erste und wenigstens eine zweite Anschlagbahn (31, 32) erste Teilbereiche (31a, 32a), in welchen die den jeweiligen Anschlagbahnen (31, 32) zugeordneten Riegel (13a, 13b) mit dem zweiten Beschlagteil (8) zusammenwirken können, und zweite Teilbereiche (31b, 32b), welche sich über einen dem Freischwenk-Winkelbereich (ϕ₂) entsprechenden Winkelbereich erstrecken und welche die Riegel (13a, 13b) daran hindern, mit dem zweiten Beschlagteil (8) zusammenzuwirken, aufweisen.

3. Beschlag nach Anspruch 2, **dadurch gekennzeichnet, dass** die ersten Teilbereiche (31a, 32a) radial weiter außen und die zweiten Teilbereich (31b, 32b) radial weiter innen verlaufen, wobei die ersten und die zweiten Teilbereiche (31a, 31b, 32a, 32b) für sich jeweils einen wenigstens näherungsweise konstanten Abstand zur Achse (A) aufweisen.

4. Beschlag nach einem der Ansprüche 1 bis 3, **dadurch gekennzeichnet, dass** die wenigstens eine erste Anschlagbahn (31) am Rande einer Kulisse (29) des Freischwenk-Steuerelements (28) ausgebildet ist.

5. Beschlag nach einem der Ansprüche 1 bis 4, **dadurch gekennzeichnet, dass** die wenigstens eine zweite Anschlagbahn (32) am radial inneren Rand des ringförmigen Freischwenk-Steuerelement (28) ausgebildet ist.

6. Beschlag nach einem der Ansprüche 1 bis 5, **dadurch gekennzeichnet, dass** die ersten Riegel (13a) jeweils eine erste Nase (23a) und die zweiten Riegel (13b) jeweils eine zweite Nase (23b) aufweisen, wobei die jeweils axial von den Riegeln (13a, 13b) abstehenden Nasen (23a, 23b) mit der Steuerscheibe (19) und mit einer der Anschlagbahnen (31, 32) zusammenwirken.

7. Beschlag nach Anspruch 6, **dadurch gekennzeichnet, dass** die ersten Nasen (23a) und die zweiten Nasen (23b) radial unterschiedlich weit außen an den zugeordneten Riegeln (13a, 13b) angeordnet sind, wobei die ersten Nasen (23a) insbesondere ungefähr in der Mitte der ersten Riegel (13a) und die zweiten Nasen (23b) insbesondere an der radial innen liegende Seite der zweiten Riegel (13b) vorgesehen sind.

8. Beschlag nach Anspruch 6 oder 7, **dadurch gekennzeichnet, dass** die Steuerscheibe (19) jeweils eine erste Steuerbahn (19a) zum Zusammenwirken mit den ersten Nasen (23a) und jeweils eine zweite Steuerbahn (19b) zum Zusammenwirken mit den zweiten Nasen (23b) aufweist, wobei die ersten Steuerbahnen (19a) insbesondere in einer Aussparung der Steuerscheibe (19) und die zweiten Steuerbahnen (19b) insbesondere an der radial innen liegenden Seite der Steuerscheibe (19) vorgesehen sind.

9. Fahrzeugsitz (1) mit einem Sitzteil (3) und einer Lehne (4), welche mittels wenigstens eines Beschlags (5) nach einem der Ansprüche 1 bis 8 am Sitzteil (3) angebracht, relativ zu diesem neigungseinstellbar und freischwenkbar ist.

## Claims

1. A fitting for a vehicle seat, in particular a motor vehicle seat, with a first fitting part (7), a second fitting part (8) which is rotatable about an axis (A) relative to the first fitting part (7), a drivable eccentric (11) mounted rotatably about the axis (A), at least four locking elements (13a, 13b) which are guided in the radial direction with respect to the axis (A) by the first fitting part (7) and, acted upon by the eccentric (11), are movable radially outward and interact radially on the outside with the second fitting part (8) in order to lock the fitting (5), and with a disk cam (19) which pulls the locking elements (13a, 13b) radially inward in order to unlock the fitting (5), and with a free-pivoting control element (28) which, in a certain free-pivoting angular range (ϕ₂) corresponding to a relative angular range of the fitting parts (7, 8), prevents the fitting (5) from locking, and which has at least one first stop track (31) for interaction with at least one locking element (13a), **characterized in that** the free-pivoting control element (28) has at least one second stop track (32) which is offset axially and/or radially with respect to the first stop track (31), and **in that** the locking elements (13a, 13b) comprise at least two first locking elements (13a) which interact with the at least first stop track (31), and second locking elements (13b) which are each adjacent to the first locking elements (13a) and interact with the at least second stop track (32).

2. The fitting as claimed in claim 1, **characterized in that** the at least one first and the at least one second stop track (31, 32) have first subregions (31a, 32a) in which the locking elements (13a, 13b) assigned to the respective stop tracks (31, 32) can interact with the second fitting part (8), and second subregions (31 b, 32b) which extend over an angular range corresponding to the free-pivoting angular range (ϕ₂) and which prevent the locking elements (13a, 13b) from interacting with the second fitting part (8).

3. The fitting as claimed in claim 2, **characterized in that** the first subregions (31a, 32a) run radially further outward and the second subregions (31b, 32b) run radially further inward, with the first and second subregions (31a, 31 b, 32a, 32b) each in themselves being at an at least approximately constant distance from the axis (A).

4. The fitting as claimed in one of claims 1 to 3, **characterized in that** the at least one first stop track (31) is formed on the edge of a slotted guide (29) of the free-pivoting control element (28).

5. The fitting as claimed in one of claims 1 to 4, **characterized in that** the at least one second stop track (32) is formed on the radially inner edge of the annular free-pivoting control element (28).

6. The fitting as claimed in one of claims 1 to 5, **characterized in that** the first locking elements (13a) each have a first lug (23a) and the second locking elements (13b) each have a second lug (23b), the lugs (23a, 23b) which each protrude axially from the locking elements (13a, 13b) interacting with the disk cam (19) and with one of the stop tracks (31, 32).

7. The fitting as claimed in claim 6, **characterized in that** the first lugs (23a) and the second lugs (23b) are arranged radially outward to differing extents on the assigned locking elements (13a, 13b), the first lugs (23a) being provided in particular approximately in the center of the first locking elements (13a) and the second lugs (23b) being provided in particular on the radially inner side of the second locking elements (13b).

8. The fitting as claimed in claim 6 or 7, **characterized in that** the disk cam (19) has respectively one first control tracks (19a) for interaction with the first lugs (23a) and respectively one second control tracks (19b) for interaction with the second lugs (23b), the first control tracks (19a) being provided in particular in a cutout of the disk cam (19) and the second control tracks (19b) being provided in particular on the radially inner side of the disk cam (19).

9. A vehicle seat (1) with a seat part (3) and a backrest (4) which is fitted by means of at least one fitting (5) as claimed in one of claims 1 to 8 to the seat part (3), can be adjusted in inclination relative thereto and can be pivoted freely.

## Revendications

1. Armature pour un siège de véhicule, en particulier un siège de véhicule automobile, comportant une première partie d'armature (7), une deuxième partie d'armature (8) apte à tourner autour d'un axe (A) par rapport à la première partie d'armature (7), un excentrique (11) actionnable et monté à rotation autour de l'axe (A), au moins quatre organes de verrouillage (13a, 13b), lesquels sont guidés en direction radiale à partir de la première partie d'armature (7) par rapport à l'axe (A), sont déplaçables radialement vers l'extérieur en étant sollicités par l'excentrique (11) et coopèrent pour le verrouillage de l'armature (5) radialement vers l'extérieur avec la deuxième partie d'armature (8), un disque de commande (19) lequel tire radialement vers l'intérieur les organes de verrouillage (13a, 13b) pour le déverrouillage de l'armature (5), et un élément de commande à pivotement libre (28), lequel dans une plage angulaire de pivotement libre (ϕ₂) déterminée, correspondant à une plage angulaire relative des parties d'armature (7, 8) empêche l'armature (5) de se verrouiller, et lequel présente au moins une première piste de butée (31) pour la coopération avec au moins un organe de verrouillage (13a), **caractérisée par le fait que** l'élément de commande à pivotement libre (28) présente au moins une deuxième piste de butée (32) décalée axialement et/ou radialement par rapport à la première piste de butée (31), et que les organes de verrouillage (13a, 13b) comprennent au moins deux premiers organes de verrouillage (13a), qui coopèrent avec la au moins une première piste de butée (31), et des deuxièmes organes de verrouillage (13b) adjacents respectivement aux premiers organes de verrouillage (13a), qui coopèrent avec la au moins une deuxième piste de butée (32).

2. Armature selon la revendication 1, **caractérisée par le fait que** les au moins une première et au moins une deuxième piste de butée (31, 32) présentent des premières zones partielles (31a, 32a), dans lesquelles les organes de verrouillage (13a, 13b) associés aux pistes de butée respectives (31, 32) peuvent coopérer avec la deuxième partie d'armature (8), et des deuxièmes zones partielles (31b, 32b), lesquelles s'étendent sur une plage angulaire correspondant à la plage angulaire de pivotement libre (ϕ₂) et lesquelles empêchent les organes de verrouillage (13a, 13b) de coopérer avec la deuxième partie d'armature (8).

3. Armature selon la revendication 2, **caractérisée par le fait que** les premières zones partielles (31a, 31b) s'étendent radialement plus à l'extérieur et les deuxièmes zones partielles (31b, 32b) s'étendent radialement plus à l'intérieur, les premières et les deuxièmes zones partielles (31a, 31b, 32a, 32b) présentant en soi chacune une distance au moins approximativement constante par rapport à l'axe (A).

4. Armature selon l'une des revendications 1 à 3, **caractérisée par le fait que** la au moins une première piste de butée (31) est formée au bord d'une coulisse (29) de l'élément de commande à pivotement libre (28).

5. Armature selon l'une des revendications 1 à 4, **caractérisée par le fait que** la au moins une deuxième piste de butée (32) est formée sur le bord radialement interne de l'élément de commande à pivotement libre (28) en forme d'anneau.

6. Armature selon l'une des revendications 1 à 5, **caractérisée par le fait que** les premiers organes de verrouillage (13a) présentent chacun une première saillie (23a) et les deuxièmes organes de verrouillage (13b) présentent chacun une deuxième saillie (23b), les saillies (23a, 23b) éloignées chacune axialement des organes de verrouillage (13a, 13b) coopérant avec le disque de commande (19) et avec l'une des pistes de butée (31, 32).

7. Armature selon la revendication 6, **caractérisée par le fait que** les premières saillies (23a) et les deuxièmes saillies (23b) sont disposées sur les organes de verrouillage associés (13a, 13b) vers l'extérieur radialement sur des distances différentes, les premières saillies (23a) étant disposées en particulier approximativement au milieu des premiers organes de verrouillage (13a) et les deuxièmes saillies (23b) étant disposées en particulier sur le côté s'étendant radialement vers l'intérieur des deuxièmes organes de verrouillage (13b).

8. Armature selon l'une de revendications 6 ou 7, **caractérisée par le fait que** le disque de commande (19) présente à chaque fois une première piste de commande (19a) pour la coopération avec les premières saillies (23a) et à chaque fois une deuxième piste de commande (19b) pour la coopération avec les deuxièmes saillies (23b), les premières pistes de commande (19a) étant disposées en particulier dans un évidement du disque de commande (19) et les deuxièmes pistes de commande (19b) étant disposées en particulier sur le côté s'étendant radialement vers l'intérieur du disque de commande (19).

9. Siège de véhicule (1) avec une partie d'assise (3) et un dossier (4), lequel est appliqué au moyen d'au moins une armature (5) selon l'une des revendications 1 à 8 sur la partie d'assise (3), réglable en inclinaison et apte à pivoter librement par rapport à celle-ci.
